# EUROPEAN PATENT APPLICATION

(11) **EP 4 629 096 A1**
(43) Date of publication of application: **08.10.2025**
(21) Application number: 23916077.3
(22) Date of filing: 09.08.2023
(51) Int. Cl.: G06F 16/33, G06F 16/36, G06F 16/9038

(54) **INFORMATION SEARCH METHOD AND INFORMATION SEARCH SYSTEM**

(30) Priority: 11.01.2023 JP 2023002298
(71) Applicant: JFE Steel Corporation, Tokyo 100-0011 (JP)
(72) Inventor: MOROOKA, Nobuyuki, Tokyo 100-0011 (JP); KUWABARA, Satoshi, Tokyo 100-0011 (JP); KARIYA, Akira, Tokyo 100-0011 (JP); TAKEMURA, Yusuke, Tokyo 100-0011 (JP)
(74) Representative: Haseltine Lake Kempner LLP
(86) International application number: PCT/JP2023/029087
(87) International publication number: WO 2024/150457

(57) **Abstract**

An information search system is an information search method in which an information management device executes a search process based on a search condition so as to search a database for information that matches the search condition. The search condition includes a keyword input by a searcher and one or more narrowing keywords extracted by correlation analysis with the keyword. The information management device executes the search process after receiving a selection operation for causing the searcher to select, in the search condition, whether to set the narrowing keyword as an AND condition for the keyword or whether to set the narrowing keyword as a NOT condition for the keyword.

## Description

### Field

The present invention relates to an information search method and an information search system capable of efficiently searching information desired by a searcher from a database storing a plurality of pieces of information.

### Background

In order to search desired information from a huge amount of information stored in a database, it is necessary to input an appropriate keyword to an information search system. However, for a person with little knowledge or experience, it is difficult to input an appropriate keyword, and thus, a problem that desired information cannot be searched may occur. Under the circumstances, for example, Patent Literature 1 proposes an information search system that can search for desired information even when a keyword input is not appropriate by executing search including the keyword input and its synonym.

### Citation List

### Patent Literature

Patent Literature 1: JP 2019-121392 A

### Summary

### Technical Problem

However, in the information search system proposed in Patent Literature **1,** since search including synonyms is executed, the number of search results becomes enormous depending on the keyword input. Therefore, even when desired information is included in the search results, it takes considerable time to confirm the search results one by one to identify the desired information from enormous search results.

The present invention has been made in view of the above, and an object of the present invention is to provide an information search method and an information search system that can efficiently search for desired information from an enormous amount of information. Solution to Problem

To solve the above-described problem and achieve the object, an information search method according to the present invention includes causing an information management device to execute a search process based on a search condition including a keyword input by a searcher and one or more narrowing keywords extracted by correlation analysis with the keyword, and search a database for information that matches the search condition, wherein the information management device is configured to execute the search process after receiving a selection operation of causing the searcher to select, in the search condition, whether to set the one or more narrowing keywords as an AND condition for the keyword or whether to set the one or more narrowing keywords as a NOT condition for the keyword.

Moreover, in the above-described information search method according to the present invention, when a plurality of narrowing keywords including a first narrowing keyword and a second narrowing keyword having higher correlation with the keyword in this order are extracted as the one or more narrowing keywords, the information management device is configured to receive the selection operation for the first narrowing keyword and the second narrowing keyword, the first narrowing keyword and the second narrowing keyword having relatively high correlation with the keyword in this order.

Moreover, in the above-described information search method according to the present invention, the information management device is configured to: execute the search process when the searcher selects whether to set the first narrowing keyword as the AND condition or whether to set the first narrowing keyword as the NOT condition; and accept no selection operation for the second narrowing keyword when a number of pieces of data matching the search condition falls below a predetermined threshold.

Moreover, in the above-described information search method according to the present invention, the correlation analysis is executed based on category information arbitrarily set from a plurality of categories indicating a relationship between the keyword and the one or more narrowing keywords.

To solve the above-described problem and achieve the object, an information search system according to the present invention includes: a database; and an information management device configured to execute a search process based on a search condition including a keyword input by a searcher and one or more narrowing keywords extracted by correlation analysis with the keyword, and search a database for information that matches the search condition, wherein the information management device is configured to execute the search process after receiving a selection operation of causing the searcher to select, in the search condition, whether to set the one or more narrowing keywords as an AND condition for the keyword or whether to set the one or more narrowing keywords as a NOT condition for the keyword.

### Advantageous Effects of Invention

According to the present invention, it is possible to efficiently search for desired information from an enormous amount of information.

### Brief Description of Drawings

[FIG. 1] FIG. 1 is a block diagram illustrating a configuration of an information search system according to an embodiment.
[FIG. 2] FIG. 2 is a diagram illustrating an example of criteria for folder names and file names.
[FIG. 3A] FIG. 3A is a diagram illustrating an example of definition information stored in a category definition information storage unit.
[FIG. 3B] FIG. 3B is a diagram illustrating an example of a creation system (definition) of words belonging to categories.
[FIG. 4A] FIG. 4A is a diagram illustrating an example of information type determination keywords stored in an information type determination dictionary.
[FIG. 4B] FIG. 4B is a diagram illustrating an example of keywords stored in a keyword dictionary.
[FIG. 5] FIG. 5 is a flowchart illustrating a flow of information search process according to an embodiment of the present invention.
[FIG. 6A] FIG. 6A is a diagram illustrating an example of a first screen displayed on a display device in an information search method according to the embodiment.
[FIG. 6B] FIG. 6B is a diagram illustrating an example of a second screen displayed on the display device in the information search method according to the embodiment.
[FIG. 6C] FIG. 6C is a diagram illustrating an example of a third screen displayed on the display device in the information search method according to the exemplary embodiment.
[FIG. 6D] FIG. 6D is a diagram illustrating an example of a correlation level between a search keyword and each word (narrowing keyword) belonging to a category selected by a searcher in the information search method according to the embodiment.
[FIG. 6E] FIG. 6E is a diagram illustrating an example of a fourth screen displayed on the display device in the information search method according to the embodiment.
[FIG. 6F] FIG. 6F is a diagram illustrating an example of a fifth screen displayed on the display device in the information search method according to the embodiment.
[FIG. 6G] FIG. 6G is a diagram illustrating an example of a sixth screen displayed on the display device in the information search method according to the embodiment.
[FIG. 6H] FIG. 6H is a diagram illustrating an example of a seventh screen displayed on the display device in the information search method according to the embodiment.
[FIG. 6I] FIG. 6I is a diagram illustrating an example of an eighth screen displayed on the display device in the information search method according to the embodiment.
[FIG. 7A] FIG. 7A is a diagram illustrating an example of a ninth screen displayed on the display device in the information search method according to the embodiment.
[FIG. 7B] FIG. 7B is a diagram illustrating an example of a tenth screen displayed on the display device in the information search method according to the embodiment.
[FIG. 7C] FIG. 7C is a diagram illustrating an example of an eleventh screen displayed on the display device in the information search method according to the embodiment. Description of Embodiments

Hereinafter, an information search system and an information search method according to an embodiment of the present invention will be described. Hereinafter, as an example of search target information, equipment maintenance information in the manufacturing industry will be described. In the following description, when simply indicated as "information" or "data", they refer to "equipment maintenance information".

### [Information search system]

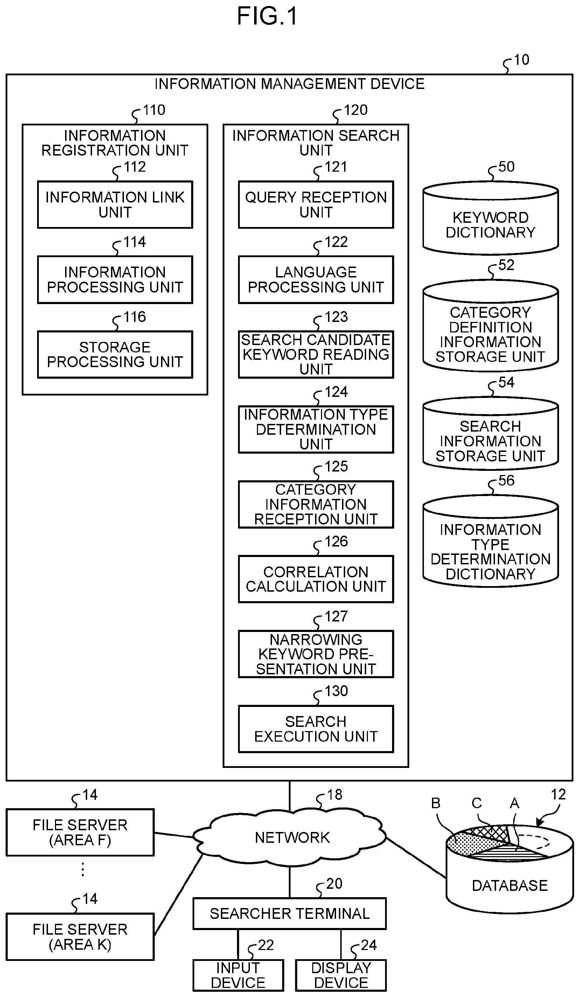

A configuration of an information search system according to the embodiment will be described with reference to FIGS. 1 to 4B. As illustrated in FIG. 1, the information search system according to the embodiment includes an information management device 10 that manages information, a database 12 that stores a plurality of pieces of equipment maintenance information to be searched for, a plurality of file servers 14, and a searcher terminal 20.

The information management device 10, the database 12, the plurality of file servers 14, and the searcher terminal 20 are connected via a network 18. The network 18 is a communication network, such as a local area network (LAN), managed by an organization (company) to which a user belongs. However, the network 18 may be a communication network in which a general public line such as a wide area network (WAN) or a virtual private network (VAN) is partially interposed, in addition to a public communication network such as the Internet.

The information management device 10 and the searcher terminal 20 are realized by a computer and a program, respectively. Examples of the searcher terminal 20 include a mobile terminal such as a smartphone, a personal computer, and a tablet computer. For example, an input device 22, such as a keyboard and a mouse, and a display device 24 such as a display are connected to or integrated with the searcher terminal 20.

In the database 12, documents including reports and manuals, drawings, photographs, and the like stored in each file server 14 are aggregated and stored. Information stored in the database 12 includes information such failures and defects of the device or the like and causes thereof, and further includes work standards including countermeasures and manuals. The file server 14 according to the present embodiment is installed in each of a plurality of areas on the assumption that specific equipment is present in a plurality of areas (e.g., a plurality of countries and prefectures).

The information management device 10 executes a search process based on a search condition including a search keyword input by a searcher and one or more narrowing keywords extracted by correlation analysis with the search keyword, so as to search the database 12 for information that matches the search condition.

The information management device 10 includes an information registration unit 110, an information search unit 120, and various storage units (keyword dictionary 50, category definition information storage unit 52, search information storage unit 54, and information type determination dictionary 56). Note that, in the present embodiment, a configuration serving for a registration function and a search function is divided into the information registration unit 110 and the information search unit 120. However, a single configuration may serve for both functions.

The information registration unit 110 is configured to be able to execute the registration function as described above, and more specifically executes a process of storing information stored in each file server 14 to the database 12. Furthermore, the information registration unit 110 includes an information link unit 112, an information processing unit 114, and a storage processing unit 116.

The information link unit 112 automatically links the information stored in the database 12 and the information stored in each file server 14 periodically or aperiodically. For example, when new data that is not stored in the database 12 is stored in the file server 14, the information link unit 112 acquires the new data via the network 18.

The information processing unit 114 performs predetermined data processing on the data acquired by the information link unit 112. The information processing unit 114 adds information type information to the data as the data processing. The information type information is information indicating to which information type a document belongs.

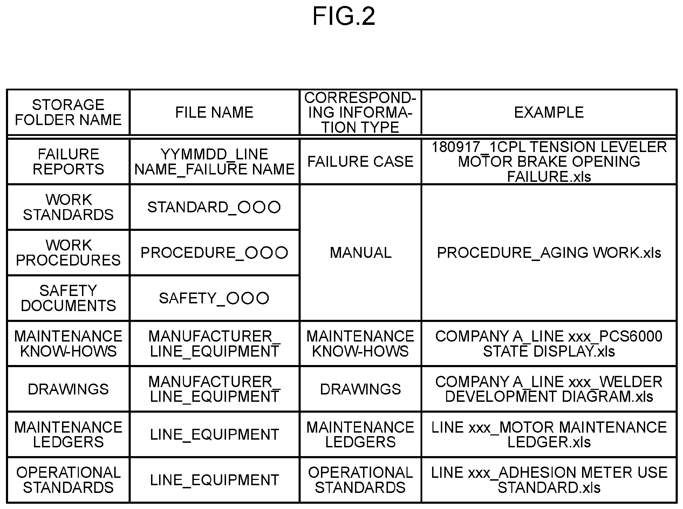

The information processing unit 114 identifies an information type of the data by, for example, a folder name in which the data has been stored, a file name of the data, and the like. FIG. 2 illustrates an example of criteria for specifying a folder name prepared in each file server 14 and a file name of data to be stored in each folder.

When the information type is identified by the folder, the information processing unit 114 sorts, for example, the information type of data stored in a folder of "failure reports" to a "failure case" with reference to FIG. **2****.** Still more, the information processing unit 114 sorts the information type of data stored in folders of "work standards", "preparation procedures", and "safety documents" to "manual", and sorts the information type of data stored in a folder of "maintenance know-hows" to "maintenance know-how". In addition, the information processing unit 114 sorts the information type of data stored in a folder of "drawings" to "drawing", sorts the information type of data stored in a folder of "maintenance ledgers" to "maintenance ledger", and sorts the information type of data stored in a folder of "operational standards" to "operational standard".

When the information processing unit 114 identifies the information type by a file name, for example, since the file name is created by a data creator based on file creation criteria in FIG. 2, the data is identified to belong to the "failure case" based on the file name.

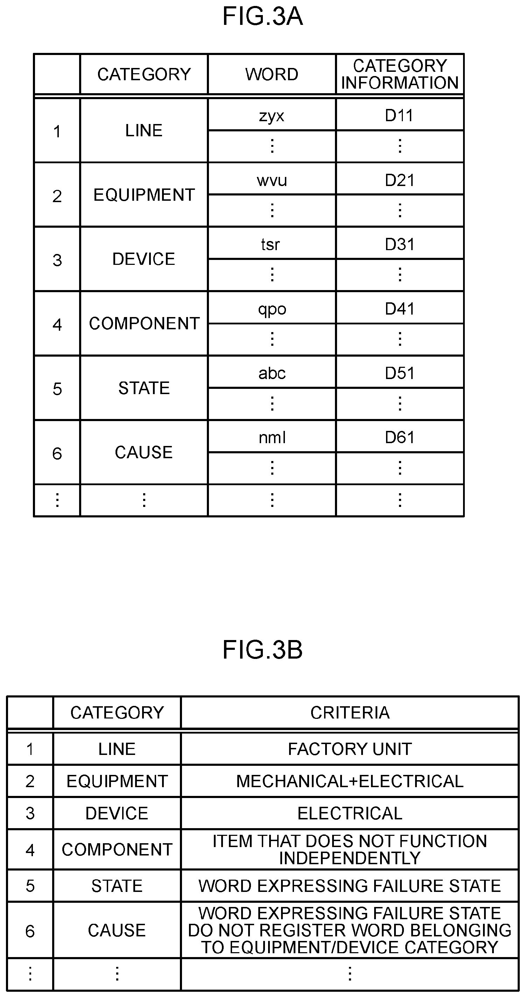

Further, as the data processing, the information processing unit 114 assigns category information to data based on category information stored in the category definition information storage unit 52. FIG. 3A illustrates an example of the category information stored in the category definition information storage unit 52. The category information defines which category a specific word belongs to in a plurality of categories based on criteria illustrated in FIG. 3B.

FIG. 3A illustrates that, for example, a word "abc" belongs to a category "state", and "D51" is allocated as the category information. Therefore, for example, when the word "abc" is included in data acquired, the category information "D51" allocated to the word "abc" is assigned to the data. Returning to FIG. 1, description of the remaining configuration will be continued.

The storage processing unit 116 stores, in the database 12, the data subjected to the data processing by the information processing unit 114. At that time, the storage processing unit 16 sorts and stores the data in the database 12 by information type (see FIG. 1).

The information stored in the database 12 is divided in advance into a plurality of groups A, B, C, and so on by type corresponding to the information type. For example, in the database 12 illustrated in FIG. 1, information on "failure case" is stored in a group A that is a first information type, information on "manual" is stored in a group B that is a second information type, and information on "drawing" is stored in a group C that is a third information type. Although not illustrated in the drawing, a group D that is a fourth information type, a group E that is a fifth information type, and a group F that is a sixth information type store information regarding "maintenance know-how", "maintenance ledger", and "operational standard", respectively.

The information search unit 120 searches the database 12 and extracts specific equipment maintenance information based on a search instruction from the searcher terminal 20. The information search unit 120 includes a query reception unit 121, a language processing unit 122, a search candidate keyword reading unit 123, an information type determination unit 124, a category information reception unit 125, a correlation calculation unit 126, a narrowing keyword presentation unit 127, and a search execution unit 130.

The query reception unit 121 receives, via the network 18, a query input by the searcher via the input device 22 of the searcher terminal 20. A query input format is not particularly limited, and for example, one or more words may be input or a sentence in a natural language form may be input. From the searcher terminal 20, for example, a sentence such as "Countermeasure when BB device fails in AA equipment?" or a query using a plurality of words separated by space such as "AA device BB device" is input.

The language processing unit 122 extracts a word (independent word) by performing language processing such as known morphological analysis on the query received by the query reception unit 121.

Specifically, the language processing unit 122 extracts, from the query input, an input search keyword to be used for search later and an information type determination keyword to be used for determining an information type that is a search intention (purpose). For example, as described above, when the query sentence "Countermeasure when BB device fails in AA equipment?" is input, the language processing unit 122 extracts "AA equipment" and "BB device" as the input search keywords.

Furthermore, the language processing unit 122 determines an affirmative form and a negative form in consideration of the context of the query received by the query reception unit 121, and extracts the input search keyword. For example, when the above query includes a word "burning", either "burning" or "not burning" is determined and then extracted as the input search keyword.

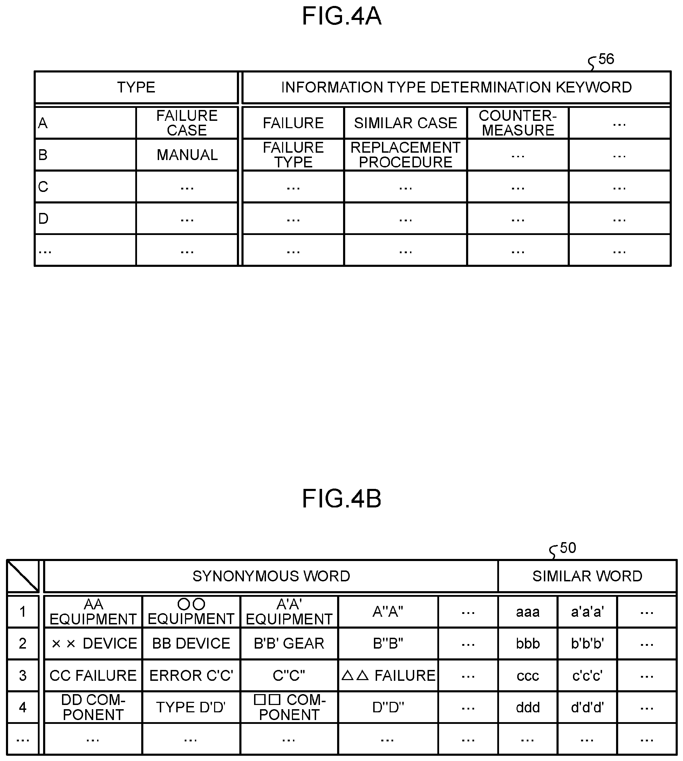

Furthermore, the language processing unit 122 refers to the information type determination dictionary 56 (see FIG. 4A), to extract a word that matches a word registered in the information type determination dictionary 56 as the information type determination keyword. For example, as described above, when the query sentence "Countermeasure when BB device fails in AA equipment?" is input, the language processing unit 122 extracts terms "failure" and "countermeasure" as the information type determination keywords.

Next, the keyword dictionary 50 will be described before the search candidate keyword reading unit 123. In the keyword dictionary 50, related keywords are registered and stored in advance in association with each other.

In the keyword dictionary 50, for example, synonymous keywords are registered in association with each other. In addition, in the keyword dictionary 50, similar keywords are registered in association with each other. However, only synonymous keywords or similar keywords may be registered in the keyword dictionary 50.

FIG. 4B illustrates examples of keywords registered in the keyword dictionary 50 in advance. In FIG. 4B, keywords in the same row are keywords related to each other, and are associated with each other.

Every time the language processing unit 122 extracts the input search keyword, the search candidate keyword reading unit 123 refers to the keyword dictionary 50 and reads a keyword related to the input search keyword as a search candidate keyword.

For example, as described above, when the input search keyword is "AA equipment", the search candidate keyword reading unit 123 performs a matching search in the keyword dictionary 50 illustrated in FIG. 4B. Then, all other keywords in the row including the "AA equipment" (first row in FIG. 4B) or specified keywords when specified (e.g., only synonymous word) are read as the search candidate keywords.

In this example, "∘∘ equipment", **"A'A'** equipment", and **"A"A""** are read as synonymous words of "AA equipment", and "aaa" and **"a'a'a'"** are read as similar words of "AA equipment". Similarly, regarding the "BB device", related keywords are read as the search candidate keywords with reference to the second row in FIG. 4B.

Next, the search information storage unit 54 will be described before the information type determination unit 124. The search information storage unit 54 stores the input search keyword and the information type determination keyword extracted by the language processing unit 122, and the search candidate keyword read by the search candidate keyword reading unit 123 as the search keywords. For example, every time a query is additionally input and an additional search keyword is extracted (read), the search information storage unit 54 cumulatively stores the search keywords.

The information type determination unit 124 determines the information type indicating the search intention of the searcher based on the information type determination keyword extracted from the query. Specifically, the information type determination unit 124 refers to the information type determination dictionary 56 illustrated in FIG. 4A, and determines the type of information to be searched based on the information type determination keyword.

In the information type determination dictionary 56, an information type determination keyword assumed to be extracted from the query and an information type corresponding thereto are registered in advance in association with each other. In the information type determination dictionary 56 in FIG. 4A, the information type "failure case" is registered in advance associated with the information type determination keywords "failure", "similar case", and "countermeasure". Further, in the information type determination dictionary 56 in FIG. 4A, the information type "manual" is registered in advance in association with the information type determination keywords "failure type" and "replacement procedure". Although not illustrated in FIG. 4A, the information type determination keywords are also registered for the information types "maintenance know-how", "drawing", "maintenance ledger", and "operational standard" illustrated in FIG. 2.

The category information reception unit 125 displays a classification to which the narrowing keyword belongs in a selectable manner. For example, in the above example, information belonging to the group A "failure case" is searched with the search keywords of "AA equipment" and "BB device" (including synonymous and similar words), but the search results may be enormous in number. Therefore, the category information reception unit 125 (and the correlation calculation unit 126 and the narrowing keyword display unit to be described later) assists the searcher to add or exclude the narrowing keyword in order to narrow down the search results.

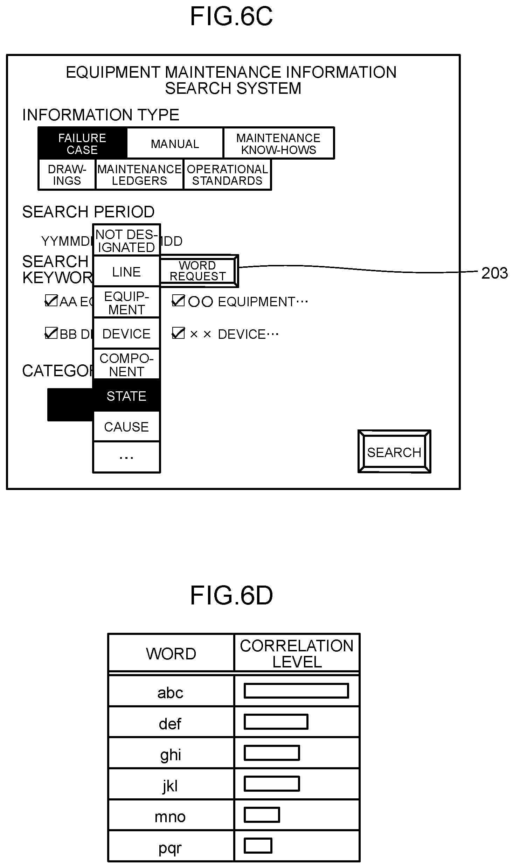

The category information reception unit 125 displays a plurality of categories in a selectable manner. Specifically, the category information reception unit 125 displays, for example, a pull-down menu so that any of the plurality of categories including "line", "equipment", "device", "component", "state", and "cause" (see FIG. 6C described later) can be selected.

The correlation calculation unit 126 calculates a correlation level between the search keyword and each word belonging to the category selected by the searcher in the category information reception unit 125. For example, the correlation calculation unit 126 can calculate the correlation level based on a frequency at which the search keyword and each word belonging to the category are simultaneously described in a same report, manual, or the like. Furthermore, the correlation calculation unit 126 can calculate the correlation level based on the number of times the search keyword and each word belonging to the category are combined as the search keyword stored in the search information storage unit 54.

Note that, when there is a plurality of search keywords, the correlation level is calculated for some or all of the search keywords according to selection by the searcher. The "search keyword" described above specifically indicates the input search keyword extracted by the language processing unit 122 and the search candidate keyword read by the search candidate keyword reading unit 123.

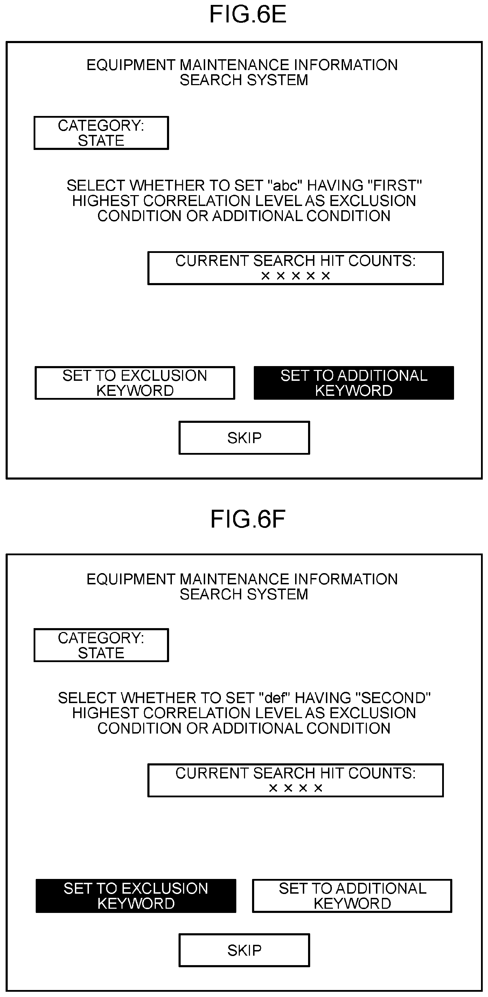

The narrowing keyword presentation unit 127 presents, in a selectable manner, to the searcher whether or not to add each word (hereinafter referred to as "narrowing keyword") belonging to the category selected by the searcher in the category information reception unit 125 to the search condition. In other words, the narrowing keyword presentation unit 127 receives a selection operation causing the searcher to select whether or not to set the narrowing keyword as an AND condition for the search keyword in the search condition of the database 12 (see FIGS. 6E to 6G to be described later). In addition, the narrowing keyword presentation unit 127 receives the selection operation causing the searcher to select whether or not to set the narrowing keyword as a NOT condition for the search keyword in the search condition of the database 12 (see FIGS. 6E to 6G to be described later). Specifically, the selection operation includes three patterns: The narrowing keyword is used for the search keyword as (1) AND condition, (2) NOT condition, and (3) neither AND condition nor NOT condition (skip).

Note that the above-described narrowing keyword is a word in which the affirmative form and the negative form are distinguished. For example, the narrowing keyword related to "burning" is either "burning" or "not burning".

Here, through the processing in the correlation calculation unit 126, a plurality of narrowing keywords including a first narrowing keyword and a second narrowing keyword having higher correlation with the search keyword in this order may be extracted as the narrowing keywords (see FIG. 6D described later). For example, in an example in FIG. 6D, the first narrowing keyword is "abc", and the second narrowing keyword is "def".

In this case, the narrowing keyword presentation unit 127 receives the selection operation related to whether or not to set the first narrowing keyword and the second narrowing keyword having a relatively high correlation with the search keyword as the AND condition for the search keyword in this order (see FIG. 6E described later). In addition, the narrowing keyword presentation unit 127 receives the selection operation related to whether or not to set the first narrowing keyword and the second narrowing keyword having a relatively high correlation with the search keyword as the NOT condition for the search keyword in this order (see FIG. 6F described later). Specifically, the selection operation includes three patterns: The first and second narrowing keywords are used for the search keyword as (1) AND condition, (2) NOT condition, and (3) neither AND condition nor NOT condition (skip).

The narrowing keyword presentation unit 127 executes a provisional search (temporary search process) when the searcher selects whether to set the first narrowing keyword as the AND condition or the NOT condition. Then, when the number of pieces of data matching the search condition falls below a predetermined threshold, the narrowing keyword presentation unit 127 does not accept the selection operation for the second narrowing keyword. In other words, the narrowing keyword presentation unit 127 does not display a screen (FIG. 6F described later) for selecting whether or not to add the second narrowing keyword to the search condition when the search result is sufficiently small as a result of performing the temporary search by adding or excluding the first narrowing keyword.

The search execution unit 130 performs a text-based matching search process on the search keywords stored in the search information storage unit 54 and the narrowing keyword selected by the searcher with respect to the information stored in the database 12. In addition, the search execution unit 130 performs the above-described matching search process on the information in a group corresponding to the information type determined by the information type determination unit 124 among the plurality of groups A, B, C, and so on in the database 12.

### [Information search method]

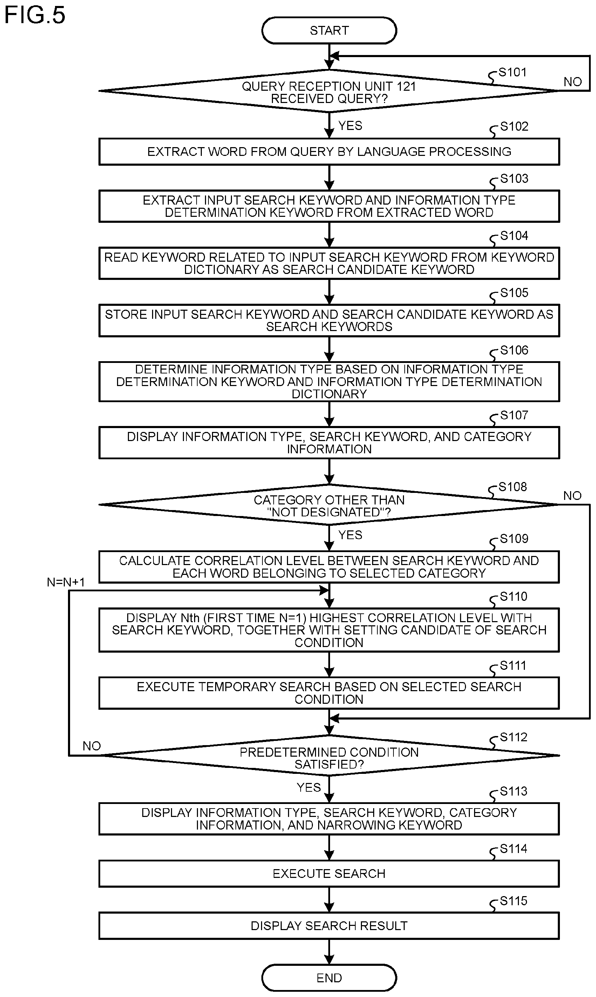

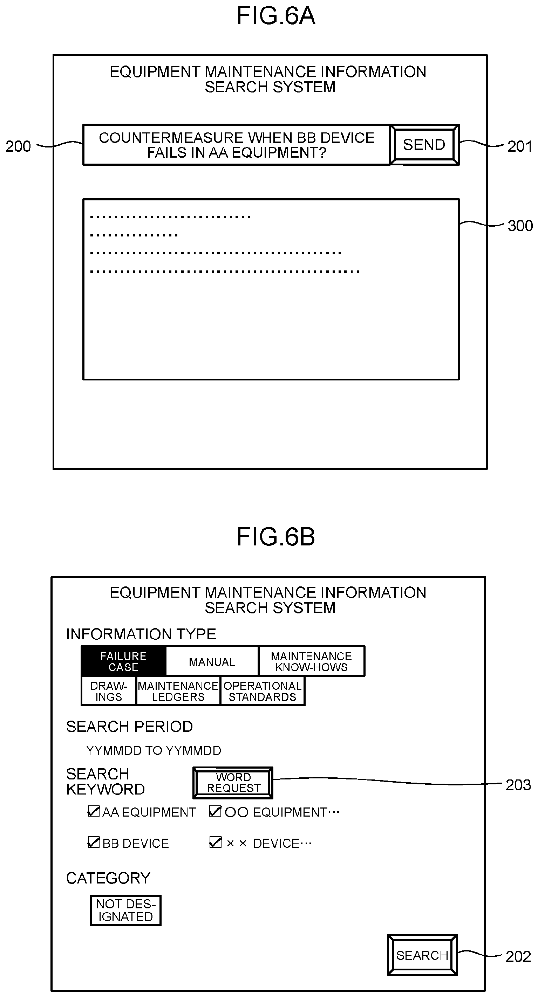

An information search method executed by the information search system according to the embodiment will be described with reference to FIGS. 5 to 7C. FIG. 5 is a flowchart illustrating a flow of the information search method according to the embodiment. FIGS. 6A to 7C are screens displayed on the display device 24 of the searcher terminal 20, and are examples of application screens for using the information search system according to the embodiment. The information search method according to the embodiment is started, for example, when the searcher activates the application in the searcher terminal 20.

First, the query reception unit 121 determines whether a query is received (Step S101). For example, when the searcher activates the application, a screen as illustrated in FIG. 6A is displayed on the display device 24. Then, when a query is input in a search box 200 by the searcher via the input device 22 and a send icon 201 is selected (e.g., clicked), the query reception unit 121 receives the query.

In the present example, a case where the query reception unit 121 receives a query sentence "Countermeasure when BB device fails in AA equipment?" will be described as an example. Note that a history display area 300 is provided in a lower part of the screen, and all or a part of the queries input to the search box 200 in the past can be copied.

In Step S101, when the query reception unit 121 receives the query (Yes in Step S101), the process proceeds to Step S102, and when no query is received (No in Step S101), the process returns to Step S101.

Subsequently, the language processing unit 122 extracts a word (independent word) by performing a natural language process, such as morphological analysis, on the query sentence received by the query reception unit 121 (Step S102). In the present example, the language processing unit 122 extracts, for example, "AA equipment", "BB device", "fail", and "countermeasure" from the query sentence "Countermeasure when BB device fails in AA equipment?".

Subsequently, the language processing unit 122 extracts (selects) the input search keyword and the information type determination keyword from the words extracted by language processing (Step S103). In the present example, the language processing unit 122 extracts, for example, "AA equipment" and "BB device" as the input search keywords, and extracts "fail" and "countermeasure" as the information type determination keywords.

Subsequently, the search candidate keyword reading unit 123 refers to the keyword dictionary 50 (see FIG. 4B) and reads a keyword related to the input search keyword as the search candidate keyword (Step S104). In this example, the search candidate keyword reading unit 123 reads, as the search candidate keyword, synonymous and similar words to which the "AA equipment" in the input search keywords extracted in Step S103 belongs, and synonymous and similar words to which the "BB device" belongs.

Subsequently, the search information storage unit 54 stores the input search keywords and the search candidate keywords read by the search candidate keyword reading unit 123 (Step S105). In the present example, the search information storage unit 54 stores "AA equipment", "BB device", and synonymous and similar words thereof.

Subsequently, the information type determination unit 124 determines the information type (search intention) based on the information type determination keyword extracted in Step S103 and the information type determination dictionary 56 (see FIG. 4A) (Step S106). In this example, the information type determination unit 124 determines "failure case" associated with "fail" and "countermeasure" as the information type.

Subsequently, the information search unit 120 displays, for example, a search period, the information type, the search keyword, and the category information on the display device 24 via the searcher terminal 20 as illustrated in FIG. 6B (Step S107). The "search keyword" described above specifically indicates the input search keyword extracted by the language processing unit 122 and the search candidate keyword read by the search candidate keyword reading unit 123.

In the screen illustrated in FIG. 6B, the information type, the search keyword, and the category information are displayed in a selectable manner, and the searcher can appropriately change the selection as necessary. In addition, an arbitrary period can be set as the search period, and when the period is not designated, the search can be executed for the entire period. In addition, the search keyword can be excluded from the search target by unchecking the check box preceding each keyword.

In the display area of the search keyword, a word request icon 203 is displayed in a selectable manner, and addition or deletion of another keyword similar to the keyword displayed as the search keyword can be requested. In addition, although "not designated" is selected as the category information in the initial state, a pull-down menu is displayed as illustrated in FIG. 6C, for example, by operating an applicable part using the input device 22 to select a desired category. In this example, there is no change in the information type and the search keywords input, and, as an example, the category information is changed from "not designated" to "state".

In Step S107, when the category information is changed from "not designated" to another category and the category information reception unit 125 receives a category other than "not designated" (Yes in Step S108), the process proceeds to Step S109. On the other hand, when the category information is not designated (No in Step S108), the process proceeds to Step S112.

Subsequently, the correlation calculation unit 126 calculates the correlation level between the search keyword selected by the searcher in Step S107 and each word belonging to the category received by the category information reception unit 125 (Step S109). In the present example, as illustrated in FIG. 6D, for example, the correlation calculation unit 126 calculates the correlation level between both keywords "AA equipment" and "BB device" and each word (abc, def, and so on) belonging to the category "state".

Subsequently, the narrowing keyword presentation unit 127 displays the narrowing keyword having the Nth (N = 1 for the first time) highest correlation level with the search keyword on the display device 24 together with the setting candidate of the search condition via the searcher terminal 20 (Step S110). Note that the above-described "narrowing keyword" indicates, for example, each word (abc, def, and so on) belonging to the category "state" as illustrated in FIG. 6D.

Subsequently, the narrowing keyword presentation unit 127 executes the temporary search based on the search condition selected by the searcher (Step S111). Subsequently, the narrowing keyword presentation unit 127 determines whether or not the predetermined condition is satisfied (Step S112), and when the predetermined condition is satisfied, the process proceeds to Step S113. When the predetermined condition is not satisfied, the process returns to Step S110 to set "N = N+1". The above-described "predetermined condition" is a condition as to whether or not to present the narrowing keyword to the searcher. Examples of the predetermined condition include a case where there is no correlated narrowing keyword and a case where search hit counts at the time of performing the temporary search are several tens (e.g., 50) or less.

Hereinafter, details of processing in Steps S110 to S112 will be described. For example, as illustrated in FIG. 6E, the narrowing keyword presentation unit 127 presents, in a selectable manner, whether or not to set "abc", which is the narrowing keyword having the "first" highest correlation level with the search keyword, as an exclusion condition (NOT condition) or an additional condition (AND condition). In addition, on the screen in FIG. 6E, the current search hit counts when the temporary search is performed only with the search keyword, icons of "exclusion keyword setting", "additional keyword setting", "skip", and the like are displayed. The "skip" icon is a button selected when the narrowing keyword is not excluded or added. In the present example, a case where the narrowing keyword "abc" is set as the additional keyword will be described as an example.

Subsequently, the narrowing keyword presentation unit 127 executes the temporary search based on the search keyword and the additional keyword "abc". Then, as illustrated in FIG. 6F, for example, the narrowing keyword presentation unit 127 presents, in a selectable manner, whether or not "def", which is the narrowing keyword having the "second" highest correlation level with the search keyword, is set as the exclusion condition (NOT condition) or the additional condition (AND condition). In the present example, a case where the narrowing keyword "def" is set as the exclusion keyword will be described as an example.

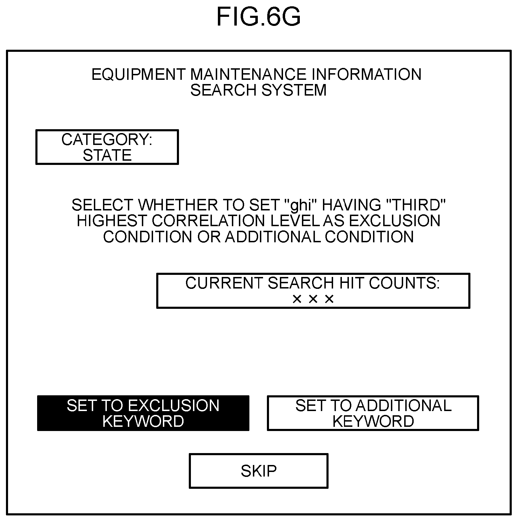

Subsequently, the narrowing keyword presentation unit 127 executes the temporary search based on the search keyword, the additional keyword "abc", and the exclusion keyword "def". Then, as illustrated in FIG. 6G, for example, the narrowing keyword presentation unit 127 presents, in a selectable manner, whether "ghi", which is the narrowing keyword having the "third" highest correlation level with the search keyword, is set as the exclusion condition (NOT condition) or the addition condition (AND condition). In the present example, a case where the narrowing keyword "ghi" is set as the exclusion keyword will be described as an example. The narrowing keyword presentation unit 127 repeatedly presents the narrowing keyword as illustrated in FIGS. 6E to 6G until the above predetermined condition is satisfied.

In this way, in the information search system according to the embodiment, the addition or exclusion of the narrowing keyword is suggested to the searcher until the number of search results becomes equal to or less than a predetermined number, whereby the narrowing of the information stored in the database 12 can be performed easily in a visually understandable manner.

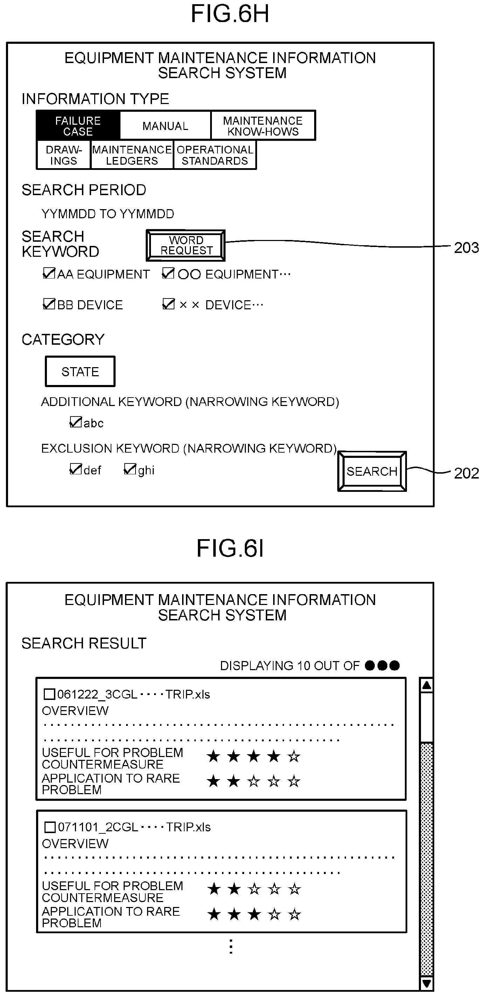

Subsequently, the narrowing keyword presentation unit 127 displays the information type, the search keyword, the category information, and the narrowing keyword (additional keyword and exclusion keyword) on the display device 24 via the searcher terminal 20 (Step S113) as illustrated in FIG. 6H. Note that, even at this stage, the search target can be excluded by unchecking the check box preceding the additional keyword or the exclusion keyword.

Subsequently, when a search icon 202 (see FIG. 6H) is selected on the screen displayed on the display device 24, the search execution unit 130 executes a search process on the information stored in the database 12 (Step S114). Specifically, the search execution unit 130 executes the text-based matching search process on the information belonging to the group corresponding to the selected information type in the database 12 based on the input search keyword, the search candidate keyword, and the narrowing keyword.

Subsequently, as illustrated in FIG. 6I, for example, the search execution unit 130 displays the search result on the display device 24 on the searcher side (Step S115), and completes the present process.

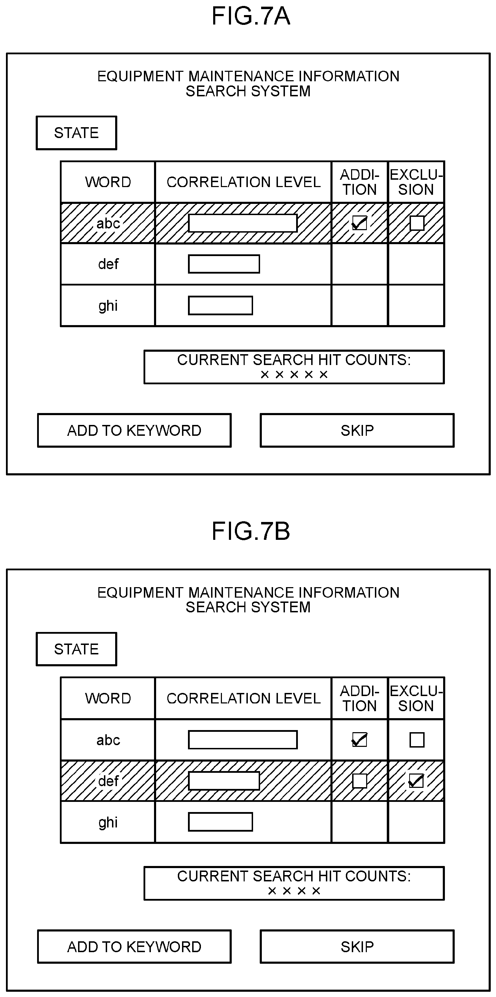

Here, in FIGS. 6E to 6G, whether or not to set the narrowing keyword as the exclusion condition or the additional condition is sequentially presented to the searcher in a descending order of the correlation level with the search keyword. However, the way of presentation is not limited thereto. For example, as illustrated in FIGS. 7A to 7C, a plurality of narrowing keywords, the correlation level of each of the narrowing keywords with the search keyword, and a check box for adding or excluding these narrowing keywords may be presented.

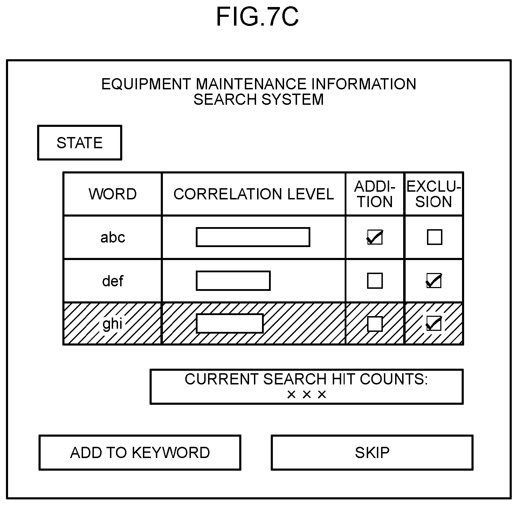

In this case, when any narrowing keyword is added or excluded by the searcher, the narrowing keyword presentation unit 127 performs the temporary search under the condition and displays the current search hit counts on the screen when the temporary search is performed. For example, in an example in FIG. 7A, the search hit counts when the narrowing keyword "abc" is added is "xxxxx", but as illustrated in FIG. 7B, the search hit counts are decreased to "xxxx" by further excluding the narrowing keyword "def". Then, as illustrated in FIG. 7C, by further excluding the narrowing keyword "ghi", the search hit counts are decreased to "xxx".

In addition, the icon of "add to keyword" on each screen in FIGS. 7A to 7C is for registering the word as the additional keyword or the exclusion keyword selected by the check box. For example, as illustrated in FIG. 7A, when the "add to keyword" icon is pressed in a state that "abc" is selected in the addition check box, "abc" is officially registered as the additional keyword, and the screen transitions to the screen in FIG. 6H. Furthermore, for example, as illustrated in FIGS. 7B and 7C, when the "add to keyword" icon is pressed in a state where "def" and "ghi" are selected in the exclusion check box, "def" and "ghi" are officially registered as the exclusion keywords, and the screen transitions to the screen of FIG. 6H.

Still more, the "skip" icon on each of the screens in FIGS. 7A to 7C is for skipping selection of each word. For example, as illustrated in FIG. 7A, when the "skip" icon is pressed in a state where "abc" can be added or excluded (state where the row of "abc" is highlighted), addition or exclusion of "abc" is skipped. Then, a row of "def" below is highlighted, and the state transitions to a state in which "def" can be added or excluded. Furthermore, for example, as illustrated in FIG. 7B, when the "skip" icon is pressed in a state that "def" can be added or excluded (state where the row of "def" is highlighted), addition or exclusion of "def" is skipped. Then, a row of "ghi" below is highlighted, and the state transitions to a state in which "ghi" can be added or excluded. Furthermore, for example, as illustrated in FIG. 7C, when the "skip" icon is pressed in a state that "ghi" can be added or excluded (state where the row of "ghi" is highlighted), addition or exclusion of "ghi" is skipped. Then, the screen transitions to the screen in FIG. 6H.

As described above, the information search system according to the embodiment presents the number of search results when the narrowing keyword is added or excluded, and suggests addition or exclusion of the narrowing keyword to the searcher. As a result, it is possible to narrow down the information stored in the database 12 easily in a visually understandable manner.

In the information search method and the information search system according to the embodiment described above, the input search keyword is extracted from the query input by the searcher, and the searcher is caused to select whether to use the narrowing keyword extracted by the correlation analysis as the AND condition or the NOT condition. As a result, it is possible to efficiently search enormous information stored in the database 12 for desired information. As a result, for example, when a failure, a defect, or the like occurs, the searcher inputs the situation in a sentence, and efficiently searches the database 12 for information serving as a reference such as past cases. Then, the searcher can quickly perform a failure recovery work of the equipment based on the information searched.

Further, in the information search method and the information search system according to the embodiment, it is possible to efficiently narrow down the number of search results by making it possible to exclude the narrowing keyword having the high correlation level. Therefore, even in a case where there are many similar cases in the past, it is possible to accurately find target information.

Although the information search method and the information search system according to the present invention have been specifically described with reference to the embodiments and examples for carrying out the invention, the gist of the present invention is not limited to these descriptions, and should be broadly interpreted based on the description of appended claims. It is obvious that various changes and modifications based on the descriptions are also included in the gist of the present invention.

For example, in the above embodiment, an example of a case where the equipment maintenance information in the manufacturing industry is searched has been described, but the present invention is not limited thereto. The information search method and the information search system according to the present invention can be applied to question & answer (Q & A) information in general, such as information indicating a treatment measure and a disease name according to a symptom of the disease and information indicating a countermeasure according to an error name or a state displayed on a machine such as a car.

In the above embodiment, the correlation level with the search keyword is calculated only once (see Step S109 in FIG. 5), and the narrowing keywords having the first to third highest correlation levels are sequentially queried (see FIGS. 6E to 6G). However, the correlation level may be calculated a plurality of times. In this case, the narrowing keyword presentation unit 127 calculates the correlation level (see FIG. 6D) of the plurality of narrowing keywords with respect to the search keyword, and presents, through the display device 24, whether or not to add or exclude the narrowing keyword having the highest correlation level.

When the searcher selects addition or exclusion of the narrowing keyword, the narrowing keyword presentation unit 127 calculates the correlation level again under the condition, and presents, through the display device 24, whether or not to add or exclude the narrowing keyword having the highest correlation level. Then, the narrowing keyword presentation unit 127 repeats the calculation of the correlation level and the presentation of the narrowing keyword until the above-described predetermined condition is satisfied. In this manner, by calculating the correlation level each time the narrowing keyword is presented, the search accuracy can be improved.

### Reference Signs List

- 10: INFORMATION MANAGEMENT DEVICE
- 12: DATABASE
- 14: FILE SERVER
- 18: NETWORK
- 20: SEARCHER TERMINAL
- 22: INPUT DEVICE
- 24: DISPLAY DEVICE
- 50: KEYWORD DICTIONARY
- 52: CATEGORY DEFINITION INFORMATION STORAGE UNIT
- 54: SEARCH INFORMATION STORAGE UNIT
- 56: INFORMATION TYPE DETERMINATION DICTIONARY
- 110: INFORMATION REGISTRATION UNIT
- 112: INFORMATION LINK UNIT
- 114: INFORMATION PROCESSING UNIT
- 116: STORAGE PROCESSING UNIT
- 120: INFORMATION SEARCH UNIT
- 121: QUERY RECEPTION UNIT
- 122: LANGUAGE PROCESSING UNIT
- 123: SEARCH CANDIDATE KEYWORD READING UNIT
- 124: INFORMATION TYPE DETERMINATION UNIT
- 125: CATEGORY INFORMATION RECEPTION UNIT
- 126: CORRELATION CALCULATION UNIT
- 127: NARROWING KEYWORD PRESENTATION UNIT
- 130: SEARCH EXECUTION UNIT

## Claims

1. An information search method comprising
causing an information management device to
execute a search process based on a search condition including a keyword input by a searcher and one or more narrowing keywords extracted by correlation analysis with the keyword, and
search a database for information that matches the search condition, wherein
the information management device is configured to execute the search process after receiving a selection operation of causing the searcher to select, in the search condition, whether to set the one or more narrowing keywords as an AND condition for the keyword or whether to set the one or more narrowing keywords as a NOT condition for the keyword.

2. The information search method according to claim **1,** wherein when a plurality of narrowing keywords including a first narrowing keyword and a second narrowing keyword having higher correlation with the keyword in this order are extracted as the one or more narrowing keywords, the information management device is configured to receive the selection operation for the first narrowing keyword and the second narrowing keyword, the first narrowing keyword and the second narrowing keyword having relatively high correlation with the keyword in this order.

3. The information search method according to claim **1,** wherein the information management device is configured to:
execute the search process when the searcher selects whether to set the first narrowing keyword as the AND condition or whether to set the first narrowing keyword as the NOT condition; and
accept no selection operation for the second narrowing keyword when a number of pieces of data matching the search condition falls below a predetermined threshold.

4. The information search method according to claim **1,** wherein the correlation analysis is executed based on category information arbitrarily set from a plurality of categories indicating a relationship between the keyword and the one or more narrowing keywords.

5. An information search system comprising:
a database; and
an information management device configured to
execute a search process based on a search condition including a keyword input by a searcher and one or more narrowing keywords extracted by correlation analysis with the keyword, and
search a database for information that matches the search condition, wherein
the information management device is configured to execute the search process after receiving a selection operation of causing the searcher to select, in the search condition, whether to set the one or more narrowing keywords as an AND condition for the keyword or whether to set the one or more narrowing keywords as a NOT condition for the keyword.
